# EUROPEAN PATENT SPECIFICATION

(11) **EP 3 417 154 B1**
(45) Date of publication and mention of the grant of the patent: **13.09.2023**
(21) Application number: 17708356.5
(22) Date of filing: 09.02.2017
(51) Int. Cl.: F01D 17/16, F02C 6/12

(54) **GUIDE APPARATUS FOR A TURBOCHARGER INCLUDING A VANE LEVER INTEGRATED ADJUSTMENT RING AXIAL TRAVEL STOP**
FÜHRUNGSVORRICHTUNG FÜR EINEN TURBOLADER MIT EINEM SCHAUFELHEBEL-INTEGRIERTEN VERSTELLRINGAXIALWEGANSCHLAG
APPAREIL DE GUIDAGE POUR UN TURBOCOMPRESSEUR COMPRENANT UNE BUTÉE DE DÉPLACEMENT AXIAL ANNULAIRE DE RÉGLAGE INTÉGRÉ À UN LEVIER À AUBE

(30) Priority: 17.02.2016 US 201615046079
(43) Date of publication of application: 26.12.2018
(73) Proprietor: BorgWarner Inc., Auburn Hills, MI 48326 (US)
(72) Inventor: WILLIAMS, Greg, Arden, North Carolina 28704 (US); MORGAN, Elias, Leicester, North Carolina 28748 (US); KENNEDY, Donald, Asheville, North Carolina 28806 (US)
(74) Representative: Peterreins Schley
(86) International application number: PCT/US2017/017135
(87) International publication number: WO 2017/142780

(56) References cited:
- EP-A1- 2 136 048
- EP-A1- 3 350 419
- DE-A1-102009 014 917
- DE-A1-102013 207 440
- US-A1- 2011 014 033

## Description

### Field of Disclosure

The present disclosure relates generally to turbochargers, and more particularly to vane levers for such turbochargers.

### Background of Disclosure

EP2136048A1 relates to a variable-capacity exhaust turbocharger, which is equipped with a variable-nozzle mechanism. The mechanism has a lever plate and a peripheral structure capable of ensuring regular operability of a nozzle vane and of preventing an occurrence of local excessive stress by increasing rigidity of the lever plate without increasing a thickness of the lever plate. The variable-capacity exhaust turbocharger equipped with the variable-nozzle mechanism included a plurality of nozzle vanes, an annular drive ring and a lever plate. As many lever plates are provided as the number of the nozzle vanes so that one end is connected to an engagement pin portion engaging with a groove portion formed in the drive ring and the other end is fixed to each nozzle vane. The drive ring is disposed between the lever plate and a nozzle mount in an axial direction. The lever plate is curved in an axial direction from a surface of the lever plate connected to the fixed portion on the side of the nozzle vane so as to be connected to the groove portion of the drive ring.

DE 1020 13207440A1 relates to a process for producing a lever of a variable turbine geometry, the lever having a base body and a pin which is connected to the base body and is in drive connection with an adjusting ring. The lever is at least partially manufactured by a powder injection molding.

Some turbo machines such as, but not limited to, automobiles, trucks, aircraft, locomotives, ships, and auxiliary power generators, utilize a turbocharger, which may increase the internal combustion engine efficiency and power output of such turbo machines. The turbocharger, being a turbine-driven device, may achieve this by forcing extra air into the combustion chamber of the engine. For example, exhaust gas from the engine may drive the turbine of the turbocharger to drive an impeller of the compressor, which may draw in ambient air, compress the air, and then supply this extra air to the engine. In this manner, the engine may have improved fuel economy, reduced emissions, and higher power and torque.

Some turbochargers, such as variable turbine geometry turbocharges, utilize adjustable guide vanes to regulate the gas flow leading to the turbine wheel. For example, the adjustable guide vanes may be pivotable between an upper vane ring and a lower vane ring and be mechanically engaged with an adjustment ring via a plurality of vane levers. The adjustment ring may be actuated to rotate with respect to the upper vane ring such that the rotation of the adjustment ring engages the plurality of vane levers to simultaneously pivot all of the adjustable guide vanes between a closed position and an open position.

In some designs, the adjustment ring may experience axial movement due to clearances between the adjustment ring and the plurality of vane levers. In an effort to reduce axial movement of the adjustment ring, some turbochargers have employed stationary axial stops such as, for example, standoff pins threaded into the bearing housing and machined pads on the bearing housing. While effective, the interface between the adjustment ring and such stationary axial stops may experience undesired wear as the adjustment ring may operationally rotate against the stationary axial stops.

Another example may be found in U.S. Patent Application Publication No. 2011/0171009, which discloses a variable- vane assembly having a unison ring restrained axially by axial stops. The axial stops include a cap formed at an end of a cylindrical pin section. The cap includes a first diameter that is greater than a second diameter of the cylindrical pin such that the inner edge of the unison ring engages the cylindrical pin acting as a radial stop for the unison ring. In this arrangement, the unison ring is also axially positioned between the nozzle ring and the cap such that the cap prevents excessive axial movement of the unison ring away from the nozzle ring. While effective, the unison ring may be in continuous engagement with the cylindrical pin and the cap during operational rotation of the unison ring causing frictional wear at the contact area of these components.

### Summary of Disclosure

The present invention refers to a guide apparatus as defined in claim 1 and a turbocharger as defined in claim 6. Respective preferred embodiments are defined in the dependent claims.

These and other aspects and features of the present disclosure may be better appreciated by reference to the following detailed description and accompanying drawings.

### Brief Description of Drawings

FIG. 1 is an axial cross-sectional view of an exemplary turbocharger, in accordance with an embodiment of the present disclosure;
FIG. 2 is a perspective view, with portions broken and sectioned away, of an exemplary turbocharger, in accordance with an embodiment of the present disclosure;
FIG. 3 is a perspective view, with portions broken and sectioned away, of the exemplary turbocharger of FIG. 2 viewed from the turbine housing side, in accordance with an embodiment of the present disclosure;
FIG. 4 is a plan view, with portions broken and sectioned away, of the exemplary turbocharger of FIG. 2 illustrating the plurality of vanes, the adjustment ring, the upper vane ring, and the plurality of vane levers, in accordance with an embodiment of the present disclosure;
FIG. 5 is a perspective view, with portions broken and sectioned away, exemplarily illustrating an adjustment ring, a plurality of vane levers, an upper vane ring, and a lower vane ring of a turbocharger, in accordance with an embodiment of the present disclosure; and
FIG. 6 is a perspective view of an exemplary vane lever, in accordance with an embodiment of the present disclosure.

It should be understood that the drawings are not to scale, and that the disclosed embodiments are illustrated only diagrammatically and in partial views. It should also be understood that this disclosure is not limited to the particular embodiments illustrated herein.

### Detailed Description

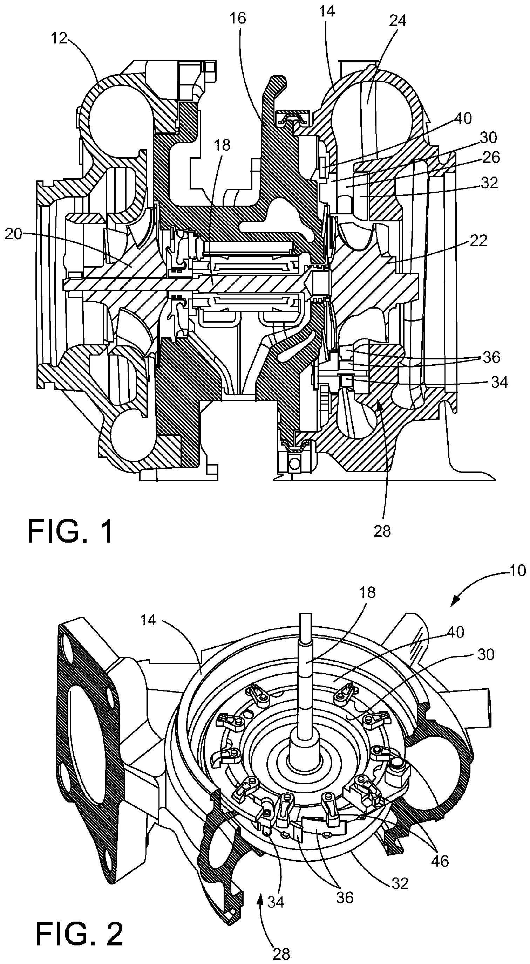

Referring now to FIG. 1, an exemplary turbocharger constructed in accordance with the present disclosure is generally referred to by reference numeral 10. The turbocharger 10 may be utilized in conjunction with an internal combustion engine of a turbo machine such as, but not limited to, an automobile, a truck, an aircraft, a locomotive, a ship, and an auxiliary power generator. The turbocharger 10 may increase the power output of such engines by extracting power from the exhaust gases of the engine to compress the air to be delivered to the air intake of the engine such that the compressed air may mix with fuel and be burned in the engine. The turbocharger 10 may include a compressor housing 12, a turbine housing 14, and a bearing housing 16 arranged between the compressor housing 12 and the turbine housing 14. The bearing housing 16 may support a rotatable shaft 18. A compressor wheel 20 may be arranged in the compressor housing 12 and may be rotatably driven via the shaft 18 by a turbine wheel 22 arranged in the turbine housing 14. The turbine housing 14 may include a volute 24, which may be a generally annual chamber that radially transitions into a throat 26.

With reference to FIGS. 1-3, the turbocharger 10 is of the variable turbine geometry (VTG) type and includes a guide apparatus 28. The guide apparatus 28 is arranged in the turbine housing 14 to adjust airflow passing to the turbine wheel 22. The guide apparatus 28 includes an upper vane ring 30 axially offset from a lower vane ring 32 such that a plurality of spacers 34 and a plurality of vanes 36 may be arranged between the upper vane ring 30 and the lower vane ring 32. While secured in the turbine housing 14, the upper vane ring 30 may be disposed proximate the bearing housing 16.

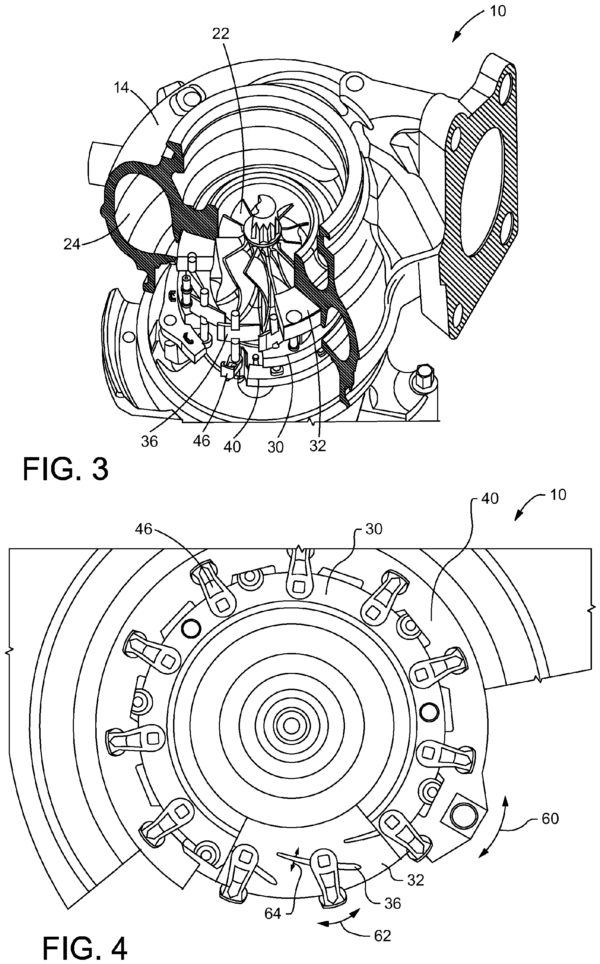

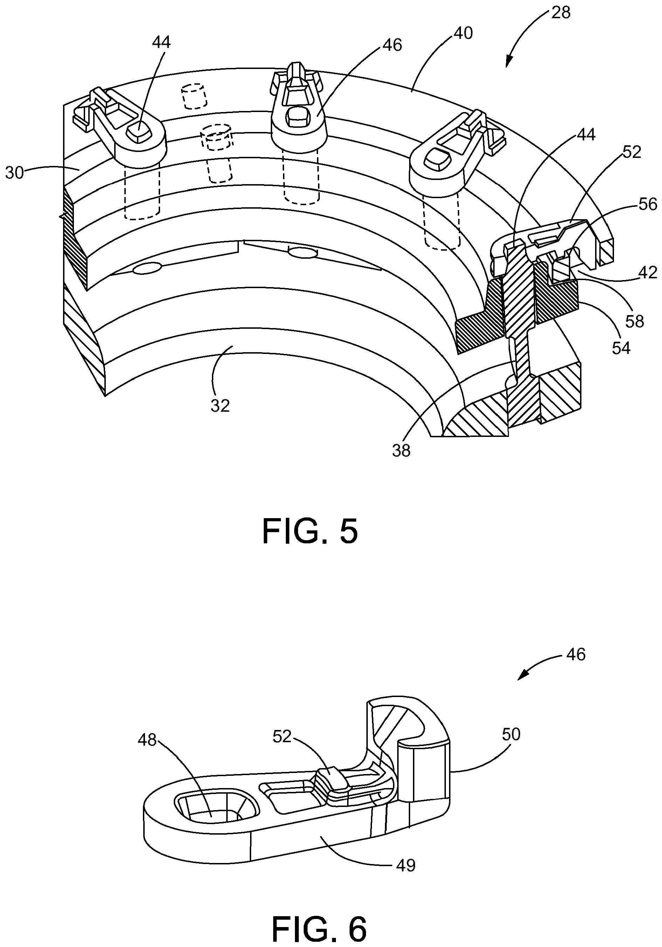

Referring to FIGS. 4 and 5, each vane of the plurality of vanes 36 may have an airfoil shape and is mounted to a vane post 38 pivotally coupled to both the upper vane ring 30 and the lower vane ring 32. The guide apparatus 28 also includes an adjustment ring 40 arranged proximate the upper vane ring 30 such that the outer circumference of the adjustment ring 40 is arranged radially outward of the upper vane ring 30. The adjustment ring 40 is in mechanical association with the plurality of vanes 36 such that rotary motion of the adjustment ring 40, with respect to the upper vane ring 30, provides simultaneous pivotal movement to each vane of the plurality of vanes 36, as explained in more detail below. The adjustment ring 40 includes a plurality of apertures 42 arranged with each aperture circumferentially spaced apart from each other.

With particular reference to FIG. 5, each vane post 38 may penetrate the upper vane ring 30 exposing the head 44 of each vane post 38 such that the head 44 projects past the upper vane ring 30 in the axial direction. The guide apparatus 28 includes a plurality of vane levers 46 such that the head 44 of each vane post 38 may be coupled to a corresponding vane lever of the plurality of vane levers 46. Each vane lever of the plurality of vane levers 46 includes a bore 48, disposed through the base 49 of each vane lever 46, for receiving the head 44 of a corresponding vane post 38. The head 44 of the corresponding vane post 38 may be arranged in the bore 48 and riveted or welded to the vane lever 46 or secured thereto by any other manner well known in the industry.

As illustrated in FIG. 6, each vane lever of the plurality of vane levers 46 includes an arm 50 extending outwardly from the base 49. In an embodiment, the arm 50 may be disposed on the opposite end of the base 49 from the bore 48. A protuberance 52 or stop is disposed on the base 49 of each vane lever of the plurality of vane levers 46. The protuberance 52 may outwardly extend in the same direction as the arm 50. The protuberance 52 is disposed, between the arm 50 and the bore 48, on each vane lever of the plurality of vane levers 46. It should be understood, however, that, in embodiments not forming part of the claimed invention, the protuberance 52 may be disposed in other locations on each vane lever of the plurality of vane levers 46.

Referring back to FIG. 5, each aperture of the plurality of apertures 42 of the adjustment ring 40 receives an arm 50 of a corresponding vane lever of the plurality of vane levers 46 in such a manner that the protuberance 52 faces the adjustment ring 40 and the adjustment ring 40 is arranged axially between the plurality of vane levers 46 and a shoulder 54 of the upper vane ring 30. The shoulder 54 extends radially outward from the upper vane ring 30. Each arm 50 of the plurality of vane levers 46 may be received in corresponding apertures of the plurality of apertures 42 to collectively limit radial movement of the adjustment ring 40.

The guide apparatus 28 includes a lever clearance 56 between the adjustment ring 40 and each protuberance 52 of the plurality of vane levers 46 and includes a ring clearance 58 between the adjustment ring 40 and the shoulder 54 of the upper vane ring 30. While the lever clearance 56 and the ring clearance 58 may allow for minor axial movement of the adjustment ring 40 between the shoulder 54 of the upper vane ring 30 and the plurality of vane levers 46, the protuberance 52 on each vane lever of the plurality of vane levers 46 serves as an axial stop against the adjustment ring 40.

Referring back to FIG. 4, as both the upper vane ring 30 and the lower vane ring 32 may be secured to the turbine housing 14, the adjustment ring 40 may be actuated to rotate, with respect to the upper vane ring 30, in one direction or the other, as illustrated by a first double arrow 60, causing each vane lever of the plurality of vane levers 46 to also rotate in the one direction or the other, respectively, as illustrated by a second double arrow 62, which in turn rotates each vane post 38 thereby causing each corresponding vane of the plurality of vanes 36 to pivot between an open position and a closed position, respectively, as illustrated by a third double arrow 64. In such an arrangement, the unison pivoting of each vane of the plurality of vanes 36, via actuation of the adjustment ring 40, may regulate the air flowing to the turbine wheel 22. Moreover, while serving as an axial stop against the adjustment ring 40, the protuberance 52 also rotates in unison along with the adjustment ring 40 during operational rotation thereof, which may translate to less wear between the components.

While each vane lever of the plurality of vane levers 46 is described to include a protuberance 52, in alternative embodiments not forming part of the claimed invention, a single one of the vane levers 46 may include the protuberance 52, alternating vane levers 46 may include the protuberance 52, or any other combination of vane levers 46 may include the protuberance 52.

### Industrial Applicability

Based on the foregoing, it can be seen that the present disclosure can find applicability in many industries such as but not limited to those employing an internal combustion engine in various turbo machines such as, but not limited to, automobiles, trucks, aircraft, locomotives, ships, and auxiliary power generators. Through the novel teachings set forth above, the guide apparatus 28 provides a protuberance 52 on each vane lever of the plurality of vane levers 46 to limit axial movement of the adjustment ring 40 such that the protuberance 52 and the adjustment ring 40 may rotate in unison with each other. In this manner, because the protuberance 52 rotates along with the adjustment ring 40, minimal sliding and rotational relative motion is present therebetween, which may be an advantage over other designs employing stationary axial stops that may cause wear due to the adjustment ring operationally rotating against the stationary axial stops. Moreover, the present disclosure may eliminate press fit manufacturing variations, which may be found in other designs. Furthermore, through the novel teachings set forth above, each vane lever of the plurality of vane levers 46 may be integrally manufactured with a protuberance 52 by any process well known in the industry such as, but not limited to, metal injection molding, casting, stamping, and fine blanking, thereby realizing a reduction of overall parts in the guide apparatus 28, and in turn, a reduction in costs.

In operation of the turbocharger 10, the plurality of vanes 36 of the guide apparatus 28 may be selectively adjusted to change the airflow passing to the turbine wheel 22 of the turbocharger 10. The plurality of vanes 36 may be adjusted, between an open position and a closed position, via selective actuation of the adjustment ring 40. For example, the adjustment ring 40 may be actuated to rotate, with respect to the upper vane ring 30, and, in turn, engage the plurality of vane levers 46 to also rotate thereby transmitting simultaneous pivotal movement to each vane of the plurality of vanes 36.

During operation of the turbocharger 10, the adjustment ring 40 may experience minor axial movement, which, however, may be limited as a result of the adjustment ring 40 abutting against the protuberance 52 of each vane lever of the plurality of vane levers 46. As such, the protuberance 52 of each vane lever of the plurality of vane levers 46 may serve as an axial stop to limit the axial movement of the adjustment ring 40. Moreover, because the protuberance 52 of each vane lever of the plurality of vane levers 46 rotates along with the adjustment ring 40, the relative motion, and in turn the amount of wear, therebetween may be minimal.

## Claims

1. A guide apparatus (28) for a turbocharger (10), the guide apparatus (28) comprising:
an upper vane ring (30), wherein the upper vane ring (30) includes a shoulder (54) extending radially outward therefrom;
a lower vane ring (32) offset axially from the upper vane ring (30);
a plurality of vanes (36) disposed between and pivotally coupled to the upper vane ring (30) and the lower vane ring (32);
an adjustment ring (40) including a plurality of apertures (42), the adjustment ring (40) in mechanical association with the plurality of vanes (36); and
a plurality of vane levers (46) coupled to the plurality of vanes (36), the plurality of vane levers (46) received correspondingly by the plurality of apertures (42), wherein each vane lever (46) of the plurality of vane levers (46) comprises:
a base (49) including a bore (48) disposed therethrough;
an arm (50) extending from the base (49), the arm (50) receivable in an aperture (42) of the plurality of apertures of the adjustment ring (40); and
a protuberance (52) extending from the base (49) and being disposed on the base (49) between the arm (50) and the bore (48),
wherein the guide apparatus (28) includes a lever clearance (56) between the adjustment ring (40) and each protuberance (52) of the plurality of vane levers (46) and a ring clearance (58) between the adjustment ring (40) and the shoulder (54) of the upper vane ring (30);
**characterized by**:
the protuberance (52) facing the adjustment ring (40), the protuberance (52) being contactable with the adjustment ring (40) and capable of limiting axial movement of the adjustment ring (40), the protuberance (52) of each vane lever of the plurality of vane levers (46) rotating along with the adjustment ring (40), and the protuberance (52) being arranged parallel to and spaced apart from the arm (50);
wherein an outer circumference of the adjustment ring (40) is arranged radially outward of the upper vane ring (30).

2. The guide apparatus of claim 1, wherein the arm (50) extends from the base (49) on an opposite end from the bore (48).

3. The guide apparatus of claim 1, wherein the arm (50) extends in the same direction as the protuberance (52).

4. The guide apparatus of claim 1, wherein each aperture (42) of the plurality of apertures (42) receives the arm (50) of one of the vane levers (46) of the plurality of vane levers (46).

5. The guide apparatus of claim 1, wherein each vane (36) of the plurality of vanes (36) is mounted to a vane post (38), the vane post (38) pivotally coupled to the upper vane ring (30) and the lower vane ring (32).

6. A turbocharger (10), comprising:
a turbine housing (14); and
a bearing housing (16) disposed between the turbine housing (14) and a compressor housing (12);
**characterized by** a guide apparatus (28) according to any one of claims 1 to 5, wherein the upper vane ring (30) is secured in the turbine housing (14) and proximate to the bearing housing (16).

7. The turbocharger of claim 6, wherein each vane lever (46) is coupled to one of the vane posts (38).

## Patentansprüche

1. Leitvorrichtung (28) für einen Turbolader (10), wobei die Leitvorrichtung (28) umfasst:
einen oberen Schaufelring (30), wobei der obere Schaufelring (30) eine Schulter (54) aufweist, die sich davon radial nach außen erstreckt;
einen unteren Schaufelring (32), der axial zum oberen Schaufelring (30) versetzt ist;
eine Mehrzahl von Schaufeln (36), die zwischen dem oberen Schaufelring (30) und dem unteren Schaufelring (32) angeordnet und drehbar mit diesen gekoppelt ist;
einen Einstellring (40) mit einer Mehrzahl von Öffnungen (42), wobei der Einstellring (40) mechanisch mit der Mehrzahl von Schaufeln (36) verbunden ist; und
eine Mehrzahl von Schaufelhebeln (46), die mit der Mehrzahl von Schaufeln (36) gekoppelt ist, wobei die Mehrzahl von Schaufelhebeln (46) entsprechend durch die Mehrzahl von Öffnungen (42) aufgenommen ist, wobei jeder Schaufelhebel (46) der Mehrzahl von Schaufelhebeln (46) umfasst:
eine Basis (49) mit einer hindurchgehenden Bohrung (48);
einen Arm (50), der sich von der Basis (49) erstreckt, wobei der Arm (50) in einer Öffnung (42) der Mehrzahl von Öffnungen des Einstellrings (40) aufnehmbar ist; und
einen Vorsprung (52), der sich von der Basis (49) aus erstreckt und auf der Basis (49) zwischen dem Arm (50) und der Bohrung (48) angeordnet ist,
wobei die Leitvorrichtung (28) einen Hebelabstand (56) zwischen dem Einstellring (40) und jedem Vorsprung (52) der Mehrzahl von Schaufelhebeln (46) und einen Ringabstand (58) zwischen dem Einstellring (40) und der Schulter (54) des oberen Schaufelrings (30) aufweist;
**dadurch gekennzeichnet, dass**:
der Vorsprung (52) dem Einstellring (40) zugewandt ist, wobei der Vorsprung (52) mit dem Einstellring (40) in Kontakt bringbar und in der Lage ist, die Axialbewegung des Einstellrings (40) zu begrenzen, wobei der Vorsprung (52) jedes Schaufelhebels der Mehrzahl von Schaufelhebeln (46) zusammen mit dem Einstellring (40) rotiert und der Vorsprung (52) parallel zu und beabstandet von dem Arm (50) angeordnet ist;
wobei ein Außenumfang des Einstellrings (40) radial außerhalb des oberen Schaufelrings (30) angeordnet ist.

2. Leitvorrichtung gemäß Anspruch 1, wobei sich der Arm (50) von der Basis (49) an einem der Bohrung (48) gegenüberliegenden Ende erstreckt.

3. Leitvorrichtung gemäß Anspruch 1, wobei sich der Arm (50) in der gleichen Richtung wie der Vorsprung (52) erstreckt.

4. Leitvorrichtung gemäß Anspruch 1, wobei jede Öffnung (42) der Mehrzahl von Öffnungen (42) den Arm (50) eines der Schaufelhebel (46) der Mehrzahl von Schaufelhebeln (46) aufnimmt.

5. Leitvorrichtung gemäß Anspruch 1, wobei jede Schaufel (36) der Mehrzahl von Schaufeln (36) an einem Schaufelpfosten (38) befestigt ist, wobei der Schaufelpfosten (38) drehbar mit dem oberen Schaufelring (30) und dem unteren Schaufelring (32) gekoppelt ist.

6. Turbolader (10), umfassend:
ein Turbinengehäuse (14); und
ein Lagergehäuse (16), das zwischen dem Turbinengehäuse (14) und einem Verdichtergehäuse (12) angeordnet ist;
**gekennzeichnet durch** eine Leitvorrichtung (28) gemäß irgendeinem der Ansprüche 1 bis 5, wobei der obere Schaufelring (30) im Turbinengehäuse (14) und in der Nähe des Lagergehäuses (16) befestigt ist.

7. Turbolader gemäß Anspruch 6, wobei jeder Schaufelhebel (46) mit einem der Schaufelpfosten (38) gekoppelt ist.

## Revendications

1. Appareil de guidage (28) pour un turbocompresseur (10), l'appareil de guidage (28) comprenant :
une bague d'aube supérieure (30), la bague d'aube supérieure (30) comprenant un épaulement (54) s'étendant radialement vers l'extérieur de celle-ci ;
une bague d'aube inférieure (32) décalé axialement de la bague d'aube supérieure (30) ;
une pluralité d'aubes (36) disposées entre la bague d'aube supérieure (30) et la bague d'aube inférieure (32) et accouplées de manière pivotante à ces dernières ;
une bague de réglage (40) comprenant une pluralité d'ouvertures (42), la bague de réglage (40) étant en association mécanique avec la pluralité d'aubes (36) ; et
une pluralité de leviers d'aube (46) accouplés à la pluralité d'aubes (36), la pluralité de leviers d'aube (46) étant reçue de manière correspondante par la pluralité d'ouvertures (42), chaque levier d'aube (46) de la pluralité de leviers d'aube (46) comprenant :
une base (49) comprenant un alésage (48) disposé au travers ;
un bras (50) s'étendant à partir de la base (49), le bras (50) pouvant être reçu dans une ouverture (42) de la pluralité d'ouvertures de la bague de réglage (40) ; et
une saillie (52) s'étendant à partir de la base (49) et étant disposée sur la base (49) entre le bras (50) et l'alésage (48),
l'appareil de guidage (28) comprenant un jeu de levier (56) entre la bague de réglage (40) et chaque saillie (52) de la pluralité de leviers d'aube (46) et un jeu de bague (58) entre la bague de réglage (40) et l'épaulement (54) de la bague d'aube supérieure (30) ;
**caractérisé par** :
la saillie (52) faisant face à la bague de réglage (40), la saillie (52) pouvant entrer en contact avec la bague de réglage (40) et pouvant limiter le mouvement axial de la bague de réglage (40), la saillie (52) de chaque levier d'aube de la pluralité de leviers d'aube (46) tournant avec la bague de réglage (40), et la saillie (52) étant disposée parallèlement au bras (50) et espacée de celui-ci ;
une circonférence extérieure de la bague de réglage (40) étant disposée radialement vers l'extérieur de la bague d'aube supérieure (30).

2. Appareil de guidage selon la revendication 1, le bras (50) s'étendant à partir de la base (49) sur une extrémité opposée à l'alésage (48).

3. Appareil de guidage selon la revendication 1, le bras (50) s'étendant dans la même direction que la saillie (52).

4. Appareil de guidage selon la revendication 1, chaque ouverture (42) de la pluralité d'ouvertures (42) recevant le bras (50) de l'un des leviers d'aube (46) de la pluralité de leviers d'aube (46).

5. Appareil de guidage selon la revendication 1, chaque aube (36) de la pluralité d'aubes (36) étant montée sur un montant d'aube (38), le montant d'aube (38) étant accouplé de manière pivotante à la bague d'aube supérieure (30) et à la bague d'aube inférieure (32).

6. Turbocompresseur (10) comprenant :
un logement de turbine (14) ; et
un logement de palier (16) disposé entre le logement de turbine (14) et un logement de compresseur (12) ;
**caractérisé par** un appareil de guidage (28) selon l'une quelconque des revendications 1 à 5, la bague d'aube supérieure (30) étant fixée dans le logement de turbine (14) et à proximité du logement de palier (16).

7. Turbocompresseur selon la revendication 6, chaque levier d'aube (46) étant accouplé à l'un des montants d'aube (38).
